(19) Europäisches Patentamt
European Patent Office
Office européen des brevets

(11) Veröffentlichungsnummer : **0 151 287**
**B1**

(12) # EUROPÄISCHE PATENTSCHRIFT

(45) Veröffentlichungstag der Patentschrift : **02.03.88**

(51) Int. Cl.⁴ : **C 09 B 29/00**, C 09 B 29/36, C 09 B 29/08

(21) Anmeldenummer : **84115642.5**

(22) Anmeldetag : **17.12.84**

(54) **Isothiazolazofarbstoffe.**

(30) Priorität : **07.01.84 DE 3400364**

(43) Veröffentlichungstag der Anmeldung : **14.08.85 Patentblatt 85/33**

(45) Bekanntmachung des Hinweises auf die Patenterteilung : **02.03.88 Patentblatt 88/09**

(84) Benannte Vertragsstaaten : **CH DE FR GB IT LI**

(56) Entgegenhaltungen :
**EP-A- 0 087 616**
**EP-A- 0 121 875**
**DE-A- 3 302 097**
**GB-A- 2 041 391**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bergmann, Udo, Dr.**
**Merckstrasse 26**
**D-6100 Darmstadt (DE)**
Erfinder : **Dix, Johannes Peter, Dr.**
**Ludwigshafener Strasse 125**
**D-6708 Neuhofen (DE)**
Erfinder : **Hansen, Günter, Dr.**
**Alwin-Mittasch-Platz 8**
**D-6700 Ludwigshafen (DE)**
Erfinder : **Schefczik, Ernst, Dr.**
**Dubliner Strasse 7**
**D-6700 Ludwigshafen (DE)**

**EP 0 151 287 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel I

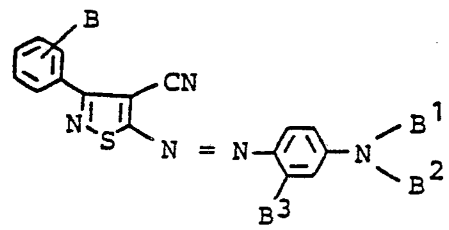

, (Ia)

in der

B Chlor, Methoxy oder Ethoxy

$B^1$ $C_2H_4CN$, $C_2H_4OH$, $C_2H_4OCOCH_3$, $C_2H_4COOCH_3$,

$B^2$ $C_1$- bis $C_4$-Alkyl und

$B^3$ Wasserstoff oder Methyl sind.

Zur Herstellung der Verbindungen der Formel I kann man z. B. eine Diazoniumverbindung von Aminen der Formel

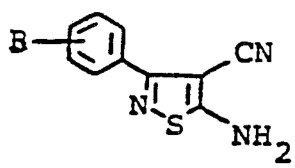

mit Kupplungskomponenten der Formel

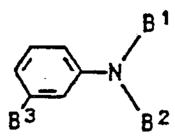

in an sich bekannter Weise umsetzen.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich als Dispersionsfarbstoffe zum Färben textiler Fasern, insbesondere von Celluloseestern und Polyestern, aber auch von Polyamiden.

Man erhält Färbungen mit guten bis sehr guten Echtheiten.

Besonders bevorzugt sind für:

B Chlor oder Methoxy,

$B^1$ $C_2H_4CN$, $C_2H_4OCOCH_3$ oder $C_2H_4COOCH_3$ und

$B^2$ Ethyl, Butyl.

Der Rest B steht bei den bevorzugten Verbindungen vorzugsweise in der p-Stellung.

Gegenüber nächstvergleichbaren, aus der EP-A-87 616 bekannten Farbstoffen zeichnen sich die erfindungsgemäßen Verbindungen durch eine bessere Thermofixierechtheit aus.

Beispiel 1

23,1 Teile 5-Amino-4-cyan-3-(4-methoxyphenyl)-isothiazol wurden in eine Mischung aus 150 Teilen Eisessig/Propionsäure (3 : 1) und 70 Teilen 85 %iger Schwefelsäure eingetragen. Bei 0-5 °C wurden 32 Teile Nitrosylschwefelsäure (11,5 % $N_2O_3$) zugetropft. Anschließend ließ man 4 Std. bei 0-5 °C rühren.

22,4 Teile N-Cyanethyl-N-butylanilin wurden gelöst in 40 Volumenteilen 30 %iger Salzsäure zu einer Mischung von 500 Teilen Wasser, 500 Teilen Eis und 1,2 Teilen eines Fettalkolethoxylats gegeben. Man ließ langsam die Diazolösung zulaufen. Nach beendeter Kupplung wurde die erhaltene Farbstoffsuspension auf 40 °C erwärmt, filtriert, der Filterkuchen mit Wasser neutral gewaschen und bei 60 °C i. Vak. getrocknet. Es wurden 44 Teile des Farbstoffs der Formel

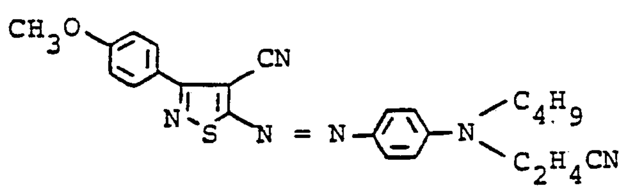

erhalten, der Polyester in klaren roten Nuancen mit sehr guten Echtheiten färbt.

Beispiel 2

23,1 Teile 5-Amino-4-cyan-3-(4-methoxyphenyl)-isothiazol wurden, wie in Beispiel 1 beschrieben, diazotiert.

Die Diazoniumsalzlösung ließ man zu einer Mischung aus 20,6 Teilen N-Cyanethyl-N-ethyl-m-toluidin, 40 Volumenteilen 30 %iger Salzsäure, 500 Teilen Wasser, 500 Teilen Eis und 1,2 Teilen eines Fettalkoholethoxylats zufließen. Nach Beendigung der Kupplung wurde die erhaltene Farbstoffsuspension auf 40 °C erwärmt, filtriert, der Filterkuchen mit Wasser neutral gewaschen und bei 60 °C i. Vak. getrocknet. Man erhielt 38,6 Teile des Farbstoffs der Formel

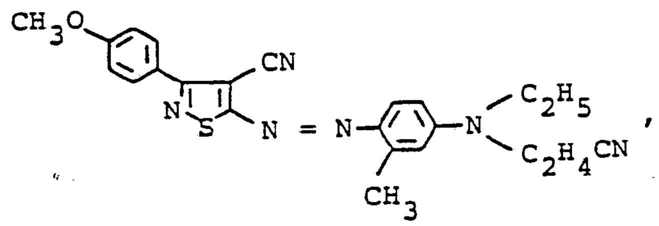,

der Polyester in rotvioletten Nuancen mit sehr guten Echtheiten färbt.

Beispiel 3

23,6 Teile 5-Amino-4-cyan-3-(4-chlorphenyl)-isothiazol wurden in eine Mischung aus 300 Teilen Eisessig/Propionsäure (3 : 1) und 70 Teilen 85 %iger Schwefelsäure eingetragen. Bei 0-5 °C wurden 32 Teile Nitrosylschwefelsäure (11,5 % $N_2O_3$) zugetropft. Anschließend ließ man 4 Stunden bei 0-5 °C rühren.

20,8 Teile N-n-Butyl-N-cyanethylanilin wurden gelöst in 40 Volumenteilen 30 %iger Salzsäure zu einer Mischung von 500 Teilen Wasser, 500 Teilen Eis und 1,2 Teilen eines Fettalkoholethoxylats gegeben. Man ließ langsam die Diazolösung zulaufen. Nach Ende der Kupplung wurde die erhaltene Farbstoffsuspension auf 60 °C erwärmt, filtriert, der Filterkuchen mit Wasser neutral gewaschen und bei 60 °C im Vakuum getrocknet. Es wurden 44 Teile des Farbstoffs der Formel

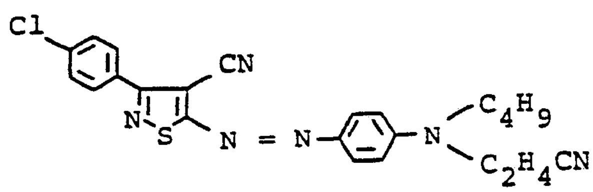

erhalten, der Polyester in brillanten blaustichigen Rottönen mit hervorragenden Echtheiten färbt.

Analog wurden auch die in der folgenden Tabelle durch Diazo- und Kupplungskomponenten gekennzeichneten Farbstoffe erhalten.

D−N=N−K

| Bsp. Nr. | D | K | Farbton auf Polyester |
|---|---|---|---|
| 4 | 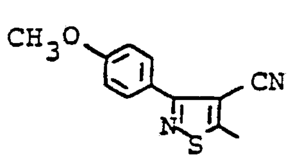 | 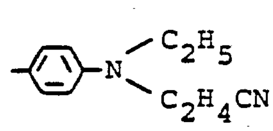 | rot |

(Fortsetzung)

D-N=N-K

| Bsp. Nr. | D | K | Farbton auf Polyester |
|---|---|---|---|
| 5 | 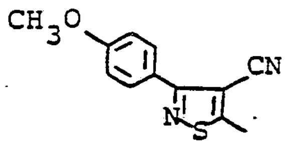 | 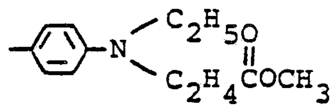 | blaustichig rot |
| 6 | " | 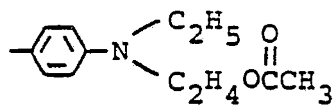 | blaustichig rot |
| 7 | 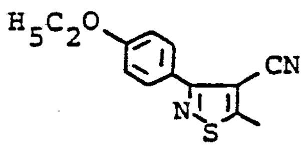 | 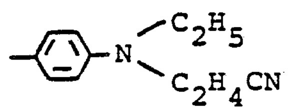 | rot |
| 8 | 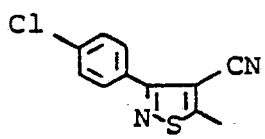 | 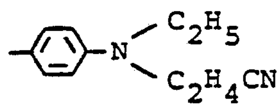 | rot |
| 9 | " | 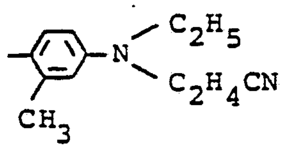 | rotviolett |
| 10 | 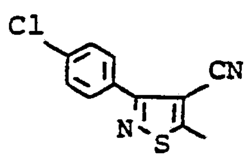 | 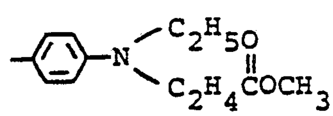 | blaustichig rot |
| 11 | " | 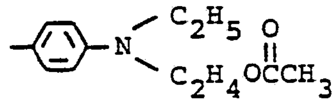 | blaustichig rot |

## Patentansprüche

1. Verbindungen der Formel

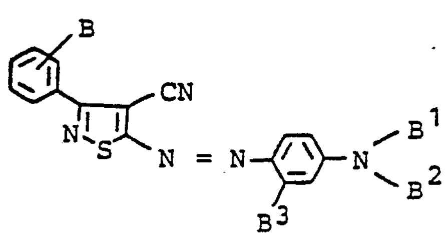 , (Ia)

in der
B Chlor, Methoxy oder Ethoxy,
$B^1$ $C_2H_4CN$, $C_2H_4OH$, $C_2H_4OCOCH_3$, $C_2H_4COOCH_3$,
$B^2$ $C_1$- bis $C_4$-Alkyl und
$B^3$ Wasserstoff oder Methyl sind.

2. Verwendung der Verbindungen gemäß Anspruch 1 zum Färben von textilen Fasern.

## Claims

1. A compound of the formula

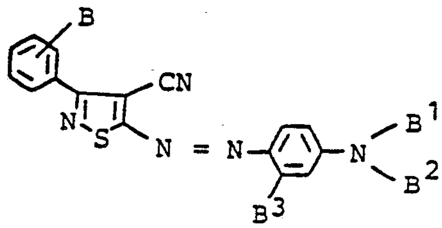

(Ia)

where
B is chlorine, methoxy or ethoxy,
$B^1$ is $C_2H_4CN$, $C_2H_4OH$, $C_2H_4OCOCH_3$ or $C_2H_4COOCH_3$,
$B^2$ is $C_1$-$C_4$-alkyl, and
$B^3$ is hydrogen or methyl.

2. The use of a compound as claimed in claim 1 for dyeing textile fibres.

## Revendications

1. Composés de formule

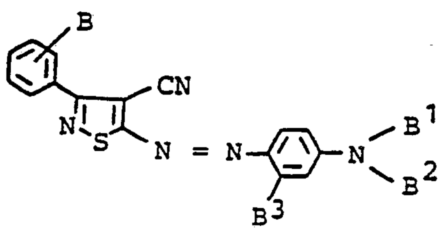

(Ia)

dans laquelle
B représente du chlore, un radical méthoxy ou éthoxy,
$B^1$ représente un radical $C_2H_4CN$, $C_2H_4OH$, $C_2H_4OCOCH_3$, $C_2H_4COOCH_3$,
$B^2$ est un groupe alkyle en $C_1$ à $C_4$ et
$B^3$ est de l'hydrogène ou un radical méthyle.

2. Utilisation des composés suivant la revendication 1 pour la teinture de fibres textiles.